# EUROPEAN PATENT APPLICATION

(11) **EP 3 825 358 A1**
(43) Date of publication of application: **26.05.2021**
(21) Application number: 19837657.6
(22) Date of filing: 18.06.2019
(51) Int. Cl.: C08L 65/00, C08G 61/06, C08J 5/00, C08K 5/5313

(54) **MOLDING MATERIAL AND MOLDED BODY**

(30) Priority: 19.07.2018 JP 2018135490
(71) Applicant: Zeon Corporation, Tokyo 100-8246 (JP)
(72) Inventor: MIYAZAWA Shinsuke, Tokyo 100-8246 (JP)
(74) Representative: Hansen, Norbert
(86) International application number: PCT/JP2019/024102
(87) International publication number: WO 2020/017219

(57) **Abstract**

Provided is a shaping material with which a shaped product having excellent flame retardancy can be formed. The shaping material contains a hydrogenated cycloolefin ring-opened polymer and an organophosphinate flame retardant. The organophosphinate flame retardant is either or both of a compound indicated by the following formula (I) and a compound indicated by the following formula (II). Moreover, the organophosphinate flame retardant has an average dispersion diameter of 10 µm or less.

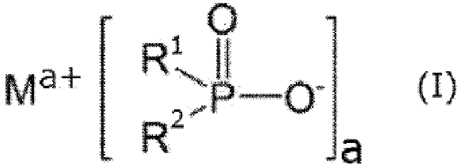

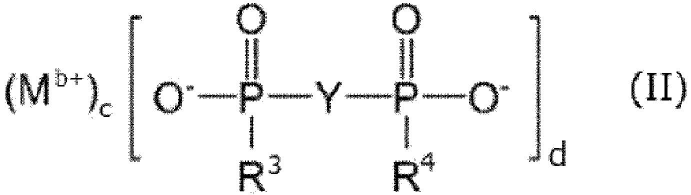

## Description

### TECHNICAL FIELD

The present disclosure relates to a shaping material and a shaped product.

### BACKGROUND

Polymers that are obtained by further subjecting a cycloolefin ring-opened polymer obtained through ring-opening polymerization of a cycloolefin to a hydrogenation reaction (hereinafter, referred to as "hydrogenated cycloolefin ring-opened polymers") are widely used as shaping materials due to excelling in terms of various characteristics such as transparency, low hygroscopicity, electrical insulation, chemical resistance, and impact resistance. On the other hand, hydrogenated cycloolefin ring-opened polymers easily burn due to having a carbon skeleton. For this reason, attempts have been made to increase the flame retardancy of a shaped product formed using a shaping material by adding a flame retardant to a hydrogenated cycloolefin ring-opened polymer.

In one example, Patent Literature (PTL) 1 discloses a flame-retardant resin composition that contains a hydrogenated cycloolefin ring-opened polymer, a condensed phosphate ester flame retardant having a specific structure, and an organophosphinate flame retardant having a specific structure. According to PTL 1, a resin shaped product obtained using this flame-retardant resin composition has excellent flame retardancy and also has a low dielectric constant and dielectric loss tangent.

### CITATION LIST

### Patent Literature

PTL 1: JP2017-149898A

### SUMMARY

### (Technical Problem)

However, there is demand for further improving the flame retardancy of a shaped product obtained through shaping of the conventional flame-retardant resin composition described above as a shaping material.

Accordingly, an object of the present disclosure is to provide a shaping material with which a shaped product having excellent flame retardancy can be formed and a shaped product that has excellent flame retardancy.

### (Solution to Problem)

The inventor conducted diligent investigation with the aim of solving the problem set forth above. The inventor focused on a point that an organophosphinate flame retardant, which readily aggregates, has not been sufficiently dispersed in a resin matrix in a conventional shaping material. The inventor discovered that in the case of a shaping material containing a hydrogenated cycloolefin ring-opened polymer and an organophosphinate flame retardant, a shaped product having excellent flame retardancy can be formed using the shaping material by setting the average dispersion diameter of the organophosphinate flame retardant in the shaping material as not more than a specific value, and, in this manner, completed the present disclosure.

Specifically, the present disclosure aims to advantageously solve the problem set forth above, and a presently disclosed shaping material comprises a hydrogenated cycloolefin ring-opened polymer and an organophosphinate flame retardant, wherein the organophosphinate flame retardant is either or both of: a compound indicated by formula (I), shown below, 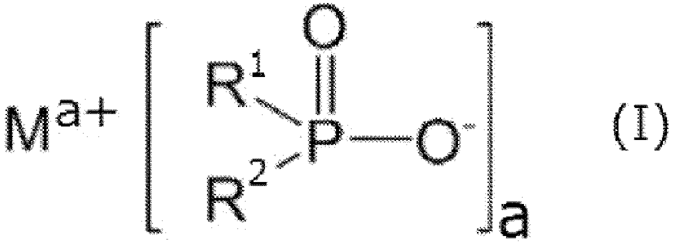 (in formula (I), R¹ and R² each represent, independently of one another, an optionally substituted alkyl group or an optionally substituted aryl group, M^{a+} represents a metal ion having a valence of a, and a represents an integer of not less than 1 and not more than 3); and a compound indicated by formula (II), shown below, 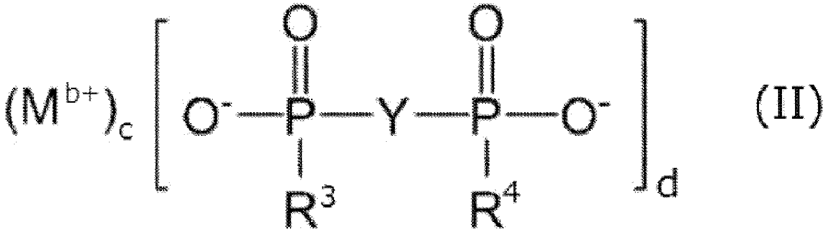 (in formula (II), R³ and R⁴ each represent, independently of one another, an optionally substituted alkyl group or an optionally substituted aryl group, Y represents a divalent group, M^{b+} represents a metal ion having a valence of b, and b, c, and d each represent an integer of not less than 1 and not more than 3 and satisfy b × c = 2 × d), and the organophosphinate flame retardant has an average dispersion diameter of 10 µm or less.

By using a shaping material that contains a hydrogenated cycloolefin ring-opened polymer and also contains a compound indicated by the preceding formula (I) (hereinafter, also referred to as organophosphinate flame retardant (I)) and/or a compound indicated by the preceding formula (II) (hereinafter, also referred to as organophosphinate flame retardant (II)) as an organophosphinate flame retardant, and in which the average dispersion diameter of the organophosphinate flame retardant is not more than the value set forth above, it is possible to obtain a shaped product having excellent flame retardancy. A shaped product that is formed using this shaping material also has excellent folding endurance.

Note that the "average dispersion diameter" of an organophosphinate flame retardant referred to in the present disclosure can be measured by a method described in the EXAMPLES section of the present specification.

Also note that the phrase "optionally substituted" as used in the present disclosure means "unsubstituted or including one or more substituents".

In the presently disclosed shaping material, content of the organophosphinate flame retardant is preferably not less than 10 parts by mass and not more than 80 parts by mass per 100 parts by mass of the hydrogenated cycloolefin ring-opened polymer. When the amount of the organophosphinate flame retardant contained in the shaping material is within the range set forth above, formability of the shaping material can be ensured while also further improving flame retardancy of a shaped product formed using the shaping material.

In the presently disclosed shaping material, content of the organophosphinate flame retardant preferably constitutes not less than 70 mass% and not more than 100 mass% among total content of the organophosphinate flame retardant and a condensed phosphate ester flame retardant indicated by formula (III), shown below. 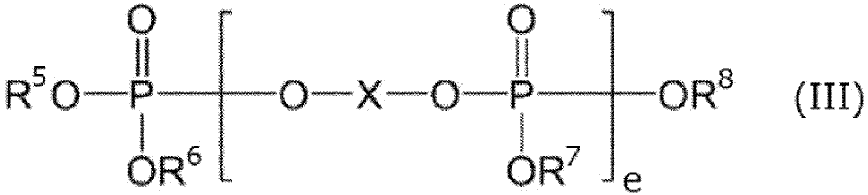 (In formula (III), R⁵, R⁶, R⁷, and R⁸ each represent independently of one another, an optionally substituted aryl group, X represents a divalent group having an arylene structure, and e represents an integer of 2 or more.) When the proportion constituted by the amount of the organophosphinate flame retardant among the total amount of the organophosphinate flame retardant and a condensed phosphate ester flame retardant indicated by formula (III) (hereinafter, also referred to as condensed phosphate ester flame retardant (III)) is within the range set forth above, excellent flame retardancy of a shaped product formed using the shaping material can be sufficiently ensured while also inhibiting corrosion of metal in contact with the shaping material in a situation in which the shaping material is exposed to high-temperature conditions.

Moreover, the present disclosure aims to advantageously solve the problem set forth above, and a presently disclosed shaped product is obtained through shaping of any one of the shaping materials set forth above. A shaped product that is obtained through shaping of any one of the shaping materials set forth above has excellent flame retardancy. Moreover, the shaped product also has excellent folding endurance.

### (Advantageous Effect)

According to the present disclosure, it is possible to provide a shaping material with which a shaped product having excellent flame retardancy can be formed and a shaped product that has excellent flame retardancy.

### DETAILED DESCRIPTION

The following provides a detailed description of embodiments of the present disclosure.

The presently disclosed shaping material can be used as a material for obtaining the presently disclosed shaped product.

### (Shaping material)

The presently disclosed shaping material contains at least a hydrogenated cycloolefin ring-opened polymer and an organophosphinate flame retardant, and optionally contains components other than the hydrogenated cycloolefin ring-opened polymer and the organophosphinate flame retardant (hereinafter, referred to as "other components"). In the presently disclosed shaping material, an organophosphinate flame retardant (I) and/or an organophosphinate flame retardant (II) having specific chemical structures are used as the organophosphinate flame retardant, and the average dispersion diameter of the organophosphinate flame retardant is 10 µm or less.

It is thought that as a result of a specific organophosphinate flame retardant being well dispersed with an average dispersion diameter of 10 µm or less in the presently disclosed shaping material, a shaped product obtained through shaping of the shaping material can be caused to display excellent flame retardancy, and mechanical characteristics such as folding endurance of the shaped product are also excellent due to the uniformity of components contained in the shaped product being high.

### <Hydrogenated cycloolefin ring-opened polymer>

The hydrogenated cycloolefin ring-opened polymer that is contained in the presently disclosed shaping material as a resin component is a polymer obtained by performing ring-opening polymerization of a cycloolefin as a monomer to obtain a cycloolefin ring-opened polymer and then further subjecting the cycloolefin ring-opened polymer to a hydrogenation reaction as previously described.

### <<Cycloolefin ring-opened polymer>>

The cycloolefin used to produce the cycloolefin ring-opened polymer can be a compound that includes an alicyclic structure in a molecule thereof and that also includes a carbon-carbon double bond in the alicyclic structure. For example, a monomer including a norbornene ring structure (hereinafter, also referred to as a "norbornene-based monomer") can suitably be used as the cycloolefin. Note that one cycloolefin may be used individually, or two or more cycloolefins may be used in combination.

A compound indicated by the following formula (IV): 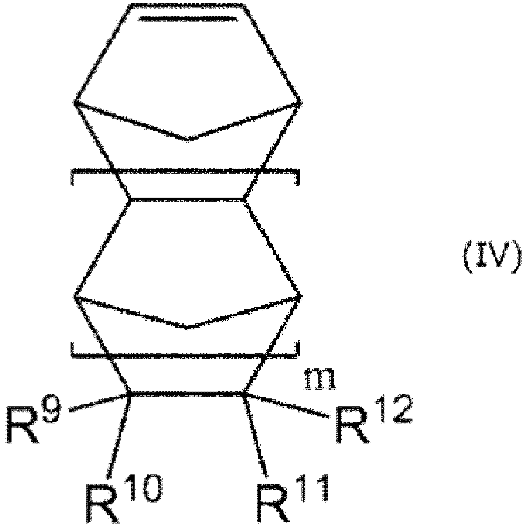 can suitably be used as a norbornene-based monomer. In formula (IV), R⁹, R¹⁰, R¹¹, and R¹² each represent, independently of one another, a hydrogen atom; a halogen atom; an optionally substituted hydrocarbon group having a carbon number of not less than 1 and not more than 20; or a substituent including at least one selected from the group consisting of a silicon atom, an oxygen atom, and a nitrogen atom. Two groups selected from R⁹, R¹⁰, R¹¹, and R¹² may bond to form a ring (for example, a monocycle or fused ring that may be an aromatic ring or non-aromatic ring). Moreover, m in formula (IV) represents 0, 1, or 2.

Examples of the halogen atom of R⁹ to R¹² include a fluorine atom, a chlorine atom, and a bromine atom.

Examples of the hydrocarbon group having a carbon number of not less than 1 and not more than 20 of R⁹ to R¹² include alkyl groups such as a methyl group, an ethyl group, an n-propyl group, an isopropyl group, an n-butyl group, an isobutyl group, a sec-butyl group, a t-butyl group, an n-pentyl group, an isopentyl group, an n-hexyl group, an n-heptyl group, an n-octyl group, an n-nonyl group, and an n-decyl group; cycloalkyl groups such as a cyclopropyl group, a cyclobutyl group, a cyclopentyl group, a cyclohexyl group, and a cycloheptyl group; alkenyl groups such as a vinyl group, a 1-propenyl group, an allyl group, a 1-butenyl group, a 2-butenyl group, a pentenyl group, a hexenyl group, and a cyclohexenyl group; alkynyl groups such as an ethynyl group, a 1-propynyl group, a 2-propynyl (propargyl) group, a 3-butynyl group, a pentynyl group, and a hexynyl group; aryl groups such as a phenyl group, a tolyl group, a xylyl group, a biphenylyl group, a 1-naphthyl group, a 2-naphthyl group, an anthryl group, and a phenanthryl group; aralkyl groups such as a benzyl group and a phenethyl group; and alkylidene groups such as a methylidene group, an ethylidene group, and a propylidene group. Examples of optional substituents of the hydrocarbon group having a carbon number of not less than 1 and not more than 20 include halogen atoms such as a fluorine atom and a chlorine atom; and alkoxy groups such as a methoxy group and an ethoxy group. Note that the hydrocarbon group having a carbon number of not less than 1 and not more than 20 may include one of these types of substituents or may include two or more of these types of substituents.

Examples of the substituent including at least one selected from the group consisting of a silicon atom, an oxygen atom, and a nitrogen atom of R⁹ to R¹² include a silyl group (trimethylsilyl group, triethylsilyl group, tert-butyldimethylsilyl group, triisopropylsilyl group, etc.), a sulfo group, a hydroxy group, a carbonyl group, a nitro group, an amino group, an imino group, a cyano group, an azo group, and an azide group.

Two groups among R⁹ to R¹² (for example, R⁹ and R¹⁰, R¹¹ and R¹², or R⁹ and R¹¹) may combine to form a ring. A ring formed by two groups among R⁹ to R¹² may be a monocycle or fused ring that may be an aromatic ring or non-aromatic ring.

Specific examples of norbornene-based monomers include:
bicyclic monomers such as bicyclo[2.2.1]hept-2-ene (common name: norbornene), 5-ethylidene-bicyclo[2.2.1]hept-2-ene (common name: ethylidene norbornene), and derivatives thereof (derivatives including a substituent on a ring; same applies below);
tricyclic monomers such as tricyclo[4.3.0^{1,6}.1^{2,5}]deca-3,7-diene (common name: dicyclopentadiene) and derivatives thereof; and
tetracyclic monomers such as 7,8-benzotricyclo[4.3.0.1^{2,5}]dec-3-ene (common name: methanotetrahydrofluorene; also referred to as 1,4-methano-1,4,4a,9a-tetrahydrofluorene), tetracyclo[4.4.0.1^{2,5}.1^{7,10}]dodec-3-ene (common name: tetracyclododecene), 8-ethylidenetetracyclo[4.4.0.1^{2,5}.1^{7,10}]-3-dodecene, and derivatives thereof.

Note that examples of optional substituents that can be included on rings of these norbornene-based monomers include the same substituents as given as examples of R⁹ to R¹². The norbornene-based monomer may include one of these types of substituents or may include two or more of these types of substituents.

Note that one norbornene-based monomer may be used individually, or two or more norbornene-based monomers may be used in combination. Of these norbornene-based monomers, dicyclopentadiene and derivatives thereof are preferable from a viewpoint of increasing the stereoregularity of the cycloolefin ring-opened polymer and imparting crystallinity described further below to the hydrogenated cycloolefin ring-opened polymer that is obtained through hydrogenation of the cycloolefin ring-opened polymer, and dicyclopentadiene is more preferable.

The amount of dicyclopentadiene that is used relative to 100 mass% of the amount of all cycloolefin used in production of the cycloolefin ring-opened polymer is preferably 50 mass% or more, more preferably 80 mass% or more, and even more preferably 100 mass%.

The cycloolefin ring-opened polymer may be a copolymer that is obtained using a norbornene-based monomer such as described above and an optionally substituted monocyclic cycloolefin.

Examples of the monocyclic cycloolefin include monocyclic monoolefins such as cyclobutene, cyclopentene, cyclohexene, cycloheptene, and cyclooctene and derivatives thereof; and monocyclic diolefins such as cyclohexadiene and cyclooctadiene and derivatives thereof. Examples of optional substituents of the monocyclic cycloolefin include alkyl groups such as a methyl group and an ethyl group; alkenyl groups such as a vinyl group; alkylidene groups such as a propan-2-ylidene group; aryl groups such as a phenyl group; a hydroxy group; an acid anhydride group; a carboxyl group; and alkoxycarbonyl groups such as a methoxycarbonyl group. Note that the monocyclic cycloolefin may include one of these types of substituents or may include two or more of these types of substituents.

Moreover, one optionally substituted monocyclic cycloolefin may be used individually, or two or more optionally substituted monocyclic cycloolefins may be used in combination.

The amount of the optionally substituted monocyclic cycloolefin that is used is not specifically limited but, relative to 100 mass% of the amount of all cycloolefin used in production of the cycloolefin ring-opened polymer, is preferably 20 mass% or less, more preferably 10 mass% or less, and even more preferably 0 mass% (i.e., the cycloolefin ring-opened polymer is even more preferably a polymer obtained using only one or more norbornene-based monomers as monomers).

No specific limitations are placed on the method by which the cycloolefin ring-opened polymer is produced. For example, a known method in which one or more monomers such as described above are ring-opening polymerized using a metathesis polymerization catalyst can be adopted. This method may, for example, be a method described in JP2017-149898A.

The weight-average molecular weight (Mw) of the cycloolefin ring-opened polymer obtained as set forth above is not specifically limited but is preferably not less than 15,000 and not more than 150,000, more preferably not less than 20,000 and not more than 100,000, and even more preferably not less than 23,000 and not more than 50,000 from a viewpoint of enhancing mechanical characteristics (folding endurance, etc.) of a shaped product formed using the shaping material.

Moreover, the molecular weight distribution (Mw/Mn) of the cycloolefin ring-opened polymer is not specifically limited but is preferably not less than 1 and not more than 5, and more preferably not less than 1 and not more than 4 from a viewpoint of enhancing mechanical characteristics (folding endurance, etc.) of a shaped product formed using the shaping material.

Note that the "weight-average molecular weight (Mw)" and "number-average molecular weight (Mn)" of a polymer such as a cycloolefin ring-opened polymer referred to in the present disclosure are standard polystyrene-equivalent values according to gel permeation chromatography (GPC) with tetrahydrofuran as an eluent solvent.

### <<Hydrogenation reaction>>

The hydrogenated cycloolefin ring-opened polymer can be obtained by subjecting the cycloolefin ring-opened polymer obtained as set forth above to a hydrogenation reaction. No specific limitations are placed on the method by which the cycloolefin ring-opened polymer is hydrogenated. For example, a known method in which hydrogen is supplied into a reaction system in the presence of a hydrogenation catalyst can be adopted. This method may, for example, be a method described in JP2017-149898A.

The percentage hydrogenation in the hydrogenation reaction (proportion of main chain and side chain carbon-carbon double bonds that are hydrogenated) is not specifically limited but is preferably 70% or more, more preferably 80% or more, even more preferably 90% or more, and particularly preferably 99% or more. A higher percentage hydrogenation can improve the heat resistance of the hydrogenated cycloolefin ring-opened polymer that is obtained.

Note that the "percentage hydrogenation" in a hydrogenation reaction referred to in the present disclosure can be measured by nuclear magnetic resonance (NMR).

### <<Properties of hydrogenated cycloolefin ring-opened polymer>>

The weight-average molecular weight (Mw) of the hydrogenated cycloolefin ring-opened polymer obtained as set forth above is not specifically limited but is preferably not less than 15,000 and not more than 150,000, more preferably not less than 20,000 and not more than 100,000, and even more preferably not less than 23,000 and not more than 50,000 from a viewpoint of enhancing mechanical characteristics (folding endurance, etc.) of a shaped product formed using the shaping material.

Moreover, the molecular weight distribution (Mw/Mn) of the hydrogenated cycloolefin ring-opened polymer is not specifically limited but is preferably not less than 1 and not more than 5, and more preferably not less than 1 and not more than 4 from a viewpoint of enhancing mechanical characteristics (folding endurance, etc.) of a shaped product formed using the shaping material.

The hydrogenated cycloolefin ring-opened polymer is preferably crystalline. By using a hydrogenated cycloolefin ring-opened polymer that is crystalline, chemical resistance of a shaped product formed using the shaping material can be increased, and heat resistance of the shaped product can be sufficiently improved.

Note that when a polymer such as a hydrogenated cycloolefin ring-opened polymer is referred to as "crystalline" in the present disclosure, this means that a melting point is detected for the polymer by differential scanning calorimetry (DSC) performed in accordance with JIS K 7121.

Although no specific limitations are placed on the temperature range for the melting point of a crystalline hydrogenated cycloolefin ring-opened polymer, the melting point is preferably 200°C or higher, and more preferably 230°C or higher, and is preferably 290°C or lower. A hydrogenated cycloolefin ring-opened polymer that has a melting point within any of the ranges set forth above has an even better balance of formability and heat resistance. Note that the melting point of the hydrogenated cycloolefin ring-opened polymer can be adjusted through adjustment of the degree of stereoregularity (particularly syndiotactic stereoregularity) of the hydrogenated cycloolefin ring-opened polymer, selection of the type of monomer(s) used, and so forth.

Note that the melting point of a polymer referred to in the present disclosure can be measured by a method described in the EXAMPLES section of the present specification.

Crystalline hydrogenated cycloolefin ring-opened polymers such as described in WO2012/033076A1, JP2002-249553A, and JP2007-16102A, for example, can be used as the crystalline hydrogenated cycloolefin ring-opened polymer without any specific limitations. Moreover, the crystalline hydrogenated cycloolefin ring-opened polymer may be a hydrogenated dicyclopentadiene ring-opened polymer having syndiotactic stereoregularity or a hydrogenated dicyclopentadiene ring-opened polymer having isotactic stereoregularity, but the use of a hydrogenated dicyclopentadiene ring-opened polymer having syndiotactic stereoregularity as a resin is preferable from viewpoints such as productivity.

Note that "syndiotactic stereoregularity" referred to in the present disclosure means that the proportion of racemo diads measured by a ¹³C-NMR measurement method described in the EXAMPLES section of the present specification is 51% or more. Moreover, the proportion of racemo diads in the hydrogenated dicyclopentadiene ring-opened polymer having syndiotactic stereoregularity is preferably 60% or more, and more preferably 70% or more.

Note that the hydrogenated dicyclopentadiene ring-opened polymer having syndiotactic stereoregularity can suitably be synthesized according to a method disclosed in JP2017-170735A, for example.

### <Organophosphinate flame retardant>

The presently disclosed shaping material contains at least one of the following organophosphinate flame retardant (I) and organophosphinate flame retardant (II) as the organophosphinate flame retardant. In other words, the shaping material may contain just the organophosphinate flame retardant (I) as the organophosphinate flame retardant, may contain just the organophosphinate flame retardant (II) as the organophosphinate flame retardant, or may contain both of the organophosphinate flame retardants (I) and (II) as the organophosphinate flame retardant.

### <<Organophosphinate flame retardant (I)>>

The organophosphinate flame retardant (I) is represented by the following formula (I).

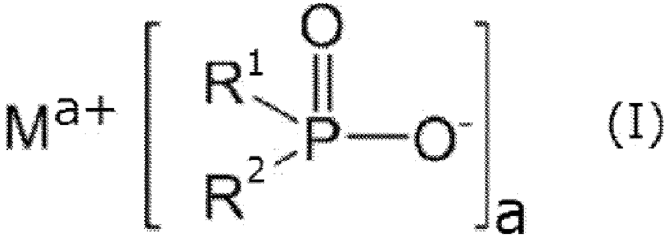

In formula (I), R¹ and R² each represent, independently of one another, an optionally substituted alkyl group or an optionally substituted aryl group.

Examples of the alkyl group of R¹ and R² include alkyl groups having a carbon number of not less than 1 and not more than 10 such as a methyl group, an ethyl group, an n-propyl group, an isopropyl group, an n-butyl group, a t-butyl group, an isobutyl group, and a sec-butyl group. Of these alkyl groups, alkyl groups having a carbon number of not less than 1 and not more than 6 are preferable.

Examples of the aryl group of R¹ and R² include aryl groups having a carbon number of not less than 6 and not more than 20 such as a phenyl group, a tolyl group, a xylyl group, a biphenylyl group, a 1-naphthyl group, a 2-naphthyl group, an anthryl group, and a phenanthryl group. Of these aryl groups, aryl groups having a carbon number of not less than 6 and not more than 12 are preferable.

Examples of optional substituents of the alkyl or aryl groups constituting R¹ and R² include halogen atoms such as a fluorine atom and a chlorine atom; and alkoxy groups such as a methoxy group and an ethoxy group. The alkyl or aryl groups constituting R¹ and R² may each include one of these types of substituents or may each include two or more of these types of substituents. Note that it is preferable that the organophosphinate flame retardant (I) does not include a halogen atom. In other words, in a case in which the alkyl or aryl groups constituting R¹ and R² include a substituent, the substituent is preferably an alkoxy group rather than a halogen atom.

M^{a+} in formula (I) represents a metal ion having a valence of a (a is an integer of not less than 1 and not more than 3). Examples of the metal ion of M^{a+} include monovalent metal ions (a = 1 in formula (I)) such as a sodium ion and a potassium ion, divalent metal ions (a = 2 in formula (I)) such as a magnesium ion, a calcium ion, and a zinc ion, and trivalent metal ions (a = 3 in formula (I)) such as an aluminum ion. Of these metal ions, a trivalent metal ion is preferable (i.e., a = 3 is preferable), and an aluminum ion is more preferable as M^{a+}.

Note that the presently disclosed shaping material may contain one type of the organophosphinate flame retardant (I) or may contain two or more types of the organophosphinate flame retardant (I).

### <<Organophosphinate flame retardant (II)>>

The organophosphinate flame retardant (II) is represented by the following formula (II).

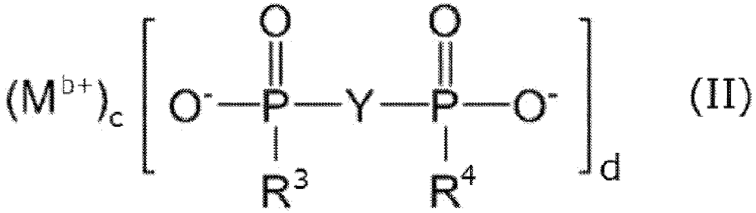

In formula (II), R³ and R⁴ each represent, independently of one another, an optionally substituted alkyl group or an optionally substituted aryl group.

Examples of the alkyl group of R³ and R⁴ include the same alkyl groups as listed as examples of the "alkyl group of R¹ and R²". Of these alkyl groups, alkyl groups having a carbon number of not less than 1 and not more than 6 are preferable.

Examples of the aryl group of R³ and R⁴ include the same aryl groups as listed as examples of the "aryl group of R¹ and R^{2"}. Of these aryl groups, aryl groups having a carbon number of not less than 6 and not more than 12 are preferable.

Examples of optional substituents of the alkyl or aryl groups constituting R³ and R⁴ include the same substituents as listed as examples of "optional substituents of the alkyl or aryl groups constituting R¹ and R^{2"}. The alkyl or aryl groups constituting R³ and R⁴ may each include one of these types of substituents or may each include two or more of these types of substituents. Note that it is preferable that the organophosphinate flame retardant (II) does not include a halogen atom. In other words, in a case in which the alkyl or aryl groups constituting R³ and R⁴ include a substituent, the substituent is preferably an alkoxy group rather than a halogen atom.

Y in formula (II) represents a divalent group. Examples of the divalent group of Y include alkylene groups having a carbon number of not less than 1 and not more than 6 such as a methylene group, an ethylene group, and a trimethylene group; and arylene groups having a carbon number of not less than 6 and not more than 20 such as a 1,2-phenylene group, a 1,3-phenylene group, a 1,4-phenylene group, a 1,5-naphthylene group, and a biphenylene group.

M^{b+} in formula (II) represents a metal ion having a valence of b (b is an integer of not less than 1 and not more than 3). Examples of the metal ion of M^{b+} include the same metal ions as listed as examples of the "metal ion of M^{a+"} _{.}

Moreover, b, c, and d each represent an integer of not less than 1 and not more than 3 and satisfy b × c = 2 × d. In other words, possible combinations of (b, c, d) include (1, 2, 1), (2, 1, 1), (2, 2, 2), (2, 3, 3), and (3, 2, 3).

Note that the presently disclosed shaping material may contain one type of the organophosphinate flame retardant (II) or may contain two or more types of the organophosphinate flame retardant (II).

### <<Preferred organophosphinate flame retardants>>

Of the organophosphinate flame retardants (I) and (II), the organophosphinate flame retardant (I) is preferable from a viewpoint of further improving flame retardancy of a shaped product formed using the shaping material, zinc bis(dimethylphosphinate), zinc bis(diethylphosphinate), aluminum tris(dimethylphosphinate), and aluminum tris(diethylphosphinate) are more preferable, and aluminum tris(diethylphosphinate) is even more preferable.

### <<Average dispersion diameter of organophosphinate flame retardant>>

The average dispersion diameter of the organophosphinate flame retardant present in a resin (specifically, the hydrogenated cycloolefin ring-opened polymer) matrix in the presently disclosed shaping material is required to be 10 µm or less, and is preferably 8 µm or less. When the average dispersion diameter of the organophosphinate flame retardant in the shaping material exceeds 10 µm, flame retardancy and folding endurance of a shaped product formed using the shaping material decrease. Although no specific limitations are placed on the lower limit of the average dispersion diameter of the organophosphinate flame retardant in the shaping material, the lower limit is normally 0.1 µm or more, and may be 2 µm or more, for example.

The average dispersion diameter of the organophosphinate flame retardant can be adjusted by altering the particle diameter (primary particle diameter and secondary particle diameter) of the organophosphinate flame retardant that is used in production of the shaping material, for example. Moreover, the average dispersion diameter can be adjusted by altering the production method of the shaping material. Specifically, in production of the shaping material through mixing of the hydrogenated cycloolefin ring-opened polymer and the organophosphinate flame retardant, by premixing the hydrogenated cycloolefin ring-opened polymer and applying a load to cause fluidization (reduced viscosity) of the hydrogenated cycloolefin ring-opened polymer before subsequently adding the organophosphinate flame retardant, aggregates of the organophosphinate flame retardant receive sufficient mixing load and dissociate in the fluidized hydrogenated cycloolefin ring-opened polymer, and thus the average dispersion diameter of the organophosphinate flame retardant in the resultant shaping material can be reduced.

### <<Melting point of organophosphinate flame retardant>>

The melting point of the organophosphinate flame retardant is preferably higher than 250°C, and more preferably higher than 300°C. By using an organophosphinate flame retardant that has a melting point of higher than 250°C, the organophosphinate flame retardant does not easily melt and can be easily dispersed even in a situation in which the organophosphinate flame retardant is mixed with the hydrogenated cycloolefin ring-opened polymer under high-temperature conditions, and thus flame retardancy and folding endurance of a resultant shaped product can be further improved.

Note that the melting point of an organophosphinate flame retardant referred to in the present disclosure can be measured in accordance with JIS K 7121 using a differential scanning calorimeter.

### <<Content of organophosphinate flame retardant>>

The content of the organophosphinate flame retardant per 100 parts by mass of the hydrogenated cycloolefin ring-opened polymer in the presently disclosed shaping material is preferably 10 parts by mass or more, more preferably 15 parts by mass or more, and even more preferably 20 parts by mass or more, and is preferably 80 parts by mass or less, more preferably 75 parts by mass or less, and even more preferably 70 parts by mass or less. When the shaping material contains the organophosphinate flame retardant in an amount of 10 parts by mass or more per 100 parts by mass of the hydrogenated cycloolefin ring-opened polymer, flame retardancy of a shaped product formed using the shaping material can be further improved. On the other hand, when the shaping material contains the organophosphinate flame retardant in an amount of 80 parts by mass or less per 100 parts by mass of the hydrogenated cycloolefin ring-opened polymer, excessive loss of formability of the shaping material does not occur.

### <Other components>

The presently disclosed shaping material can optionally contain other components without any specific limitations to the extent that the effects disclosed herein are not impaired. For example, various additives may be used as other components. Note that the presently disclosed shaping material may contain a resin component other than the hydrogenated cycloolefin ring-opened polymer as a resin component.

Moreover, the presently disclosed shaping material can contain a flame retardant other than the organophosphinate flame retardant as an additive. Specific examples of flame retardants other than the organophosphinate flame retardant include a condensed phosphate ester flame retardant indicated by the following formula (III).

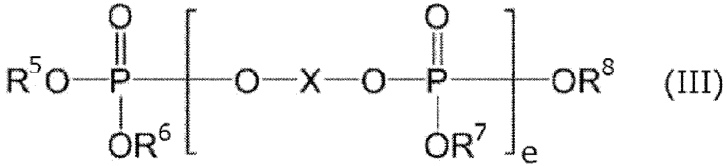

In formula (III), R⁵, R⁶, R⁷, and R⁸ each represent, independently of one another, an optionally substituted aryl group.

Examples of the aryl group of R⁵ to R⁸ include aryl groups having a carbon number of not less than 6 and not more than 20 such as a phenyl group, a biphenylyl group, a 1-naphthyl group, a 2-naphthyl group, an anthryl group, and a phenanthryl group. Of these aryl groups, aryl groups having a carbon number of not less than 6 and not more than 12 are preferable. Examples of optional substituents of the aryl groups constituting R⁵ to R⁸ include halogen atoms such as a fluorine atom and a chlorine atom; alkyl groups such as a methyl group and an ethyl group; and alkoxy groups such as a methoxy group and an ethoxy group. The aryl groups constituting R⁵ to R⁸ may each include one of these types of substituents or may each include two or more of these types of substituents.

X in formula (III) represents a divalent group having an arylene structure.

Examples of the divalent group having an arylene structure of X include a 1,2-phenylene group, a 1,3-phenylene group, a 1,4-phenylene group, a 1,5-naphthylene group, a 2,6-naphthylene group, a biphenylene group, a bisphenol A residue, a bisphenol D residue, a bisphenol AD residue, and a bisphenol S residue.

Moreover, e in formula (III) represents an integer of 2 or more, and preferably represents an integer of not less than 2 and not more than 30.

The condensed phosphate ester flame retardant (III) can contribute to improving flame retardancy of a shaped product formed using the shaping material. On the other hand, studies conducted by the inventor have revealed that the condensed phosphate ester flame retardant (III) may cause corrosion of metal in contact with the shaping material when the shaping material is exposed to high-temperature conditions during shaping of the shaping material to obtain a shaped product, for example, which is presumed to be caused by a decomposition product formed through decomposition of the condensed phosphate ester flame retardant (III).

From a viewpoint of inhibiting metal corrosion under high-temperature conditions such as described above, the proportion constituted by the content of the organophosphinate flame retardant among the total content of the organophosphinate flame retardant and the condensed phosphate ester flame retardant (III) in the shaping material is preferably not less than 70 mass% and not more than 100 mass%, more preferably not less than 80 mass% and not more than 100 mass%, even more preferably not less than 90 mass% and not more than 100 mass%, particularly preferably not less than 95 mass% and not more than 100 mass%, and most preferably 100 mass% (i.e., it is most preferable that the shaping material does not contain the condensed phosphate ester flame retardant (III)).

Likewise, from a viewpoint of inhibiting metal corrosion under high-temperature conditions, the content of the condensed phosphate ester flame retardant (III) per 100 parts by mass of the hydrogenated cycloolefin ring-opened polymer in the presently disclosed shaping material is preferably 20 parts by mass or less, more preferably 10 parts by mass or less, even more preferably 5 parts by mass or less, particularly preferably 1 part by mass or less, and most preferably 0 parts by mass (i.e., it is most preferable that the shaping material does not contain the condensed phosphate ester flame retardant (III)).

Examples of known additives other than flame retardants that can be used include fillers, antioxidants, release agents, antibacterial agents, coupling agents, plasticizers, colorants, lubricants, silicon oil, foaming agents, surfactants, light stabilizers, dispersants, dispersing aids, heat stabilizers, ultraviolet absorbers, antistatic agents, crystallization nucleating agents, antifogging agents, neutralizers, decomposers, metal deactivators, antifouling agents, fibrous reinforcers (glass fiber, carbon fiber, synthetic fiber, ceramic fiber, and whiskers), plate-shaped reinforcers (mica, talc, clay, and glass flakes), and particulate reinforcers (metal oxides, carbonates, sulfates, glass beads, and carbon black). One of these additives may be used individually, or two or more of these additives may be used in combination. The content of these additives is not specifically limited can be set as appropriate depending on the objective of addition within a range that does not cause loss of the effects disclosed herein.

### <Production method of shaping material>

The presently disclosed shaping material can be produced by mixing the components set forth above. Although no specific limitations are placed on the specific production method, it is preferable that the hydrogenated cycloolefin ring-opened polymer is premixed and that the organophosphinate flame retardant is added to the hydrogenated cycloolefin ring-opened polymer being premixed as previously described in order that the average dispersion diameter of the organophosphinate flame retardant dispersed in the resultant shaping material is not more than a specific value.

Moreover, in a case in which a crystalline hydrogenated cycloolefin ring-opened polymer is used, a method in which the hydrogenated cycloolefin ring-opened polymer is mixed in a molten state is preferable from a viewpoint of obtaining a sufficiently mixed shaping material. In the case of mixing in a molten state, the mixing is preferably performed at a temperature within a range of from 50°C higher than the glass-transition temperature of the hydrogenated cycloolefin ring-opened polymer to 150°C higher than the glass-transition temperature of the hydrogenated cycloolefin ring-opened polymer. Note that the viscosity is high and mixing is difficult when the temperature is too low, whereas degradation of the hydrogenated cycloolefin ring-opened polymer and other components tends to occur when the temperature is too high.

The shaping material can be obtained as pellets by, for example, extruding the shaping material in a molten state with a rod form after mixing thereof and cutting the extruded shaping material to an appropriate length using a strand cutter.

### <Shaped product>

The presently disclosed shaped product is a product that is obtained through shaping of the presently disclosed shaping material. The presently disclosed shaped product has excellent flame retardancy and folding endurance as a result of being obtained using the presently disclosed shaping material.

The method by which the presently disclosed shaping material is shaped is not specifically limited and a known shaping method such as injection molding, compression molding, or extrusion molding can be adopted.

Examples of applications in which the presently disclosed shaped product can be used include, but are not specifically limited to, coating materials for power transmission cables (plastic insulated wires, power cables, city/intercity cables, station cables, broadband cables, high-frequency coaxial cables, high-frequency coaxial (tubes) feed lines and elliptical waveguides, communication wires and cables, etc.); general circuit boards (rigid printed boards, flexible printed boards, multilayer printed wiring boards, etc.); high-frequency circuit boards (circuit boards for satellite communication devices, etc.); automobile exterior members (bonnets, trunk doors, doors, fenders, grills, etc.); engine members such as air intakes and engine covers; vehicle lighting members such as headlight housings, rear light housings, reflectors, and extension reflectors; automobile interior components such as instrument panels and seat housings; automobile components such as automobile motor cases, sensor cases, module component cases, and separators for fuel cell stacks; bicycle members such as members for power assist batteries; housings for robot components such as power assists, industrial robots, and electric wheelchair members; aircraft interior members; ship hull members; components of home appliances such as televisions, refrigerators, air conditioners, electric fans, humidifiers, dehumidifiers, washers and dryers, dishwashers, microwaves, rice cookers, hot water dispensers, and hairdryers; housings of electronic devices such as personal computers, printers, photocopiers, telephones, fax machines, audio devices, cameras, game consoles, hard disk drives, mobile telephones, and smartphones; electronic components such as connectors, relays, capacitors, sensors, antennas, IC trays, chassis, coil sealing, motor cases, and power supply boxes; light source lighting fixtures of backlights for liquid-crystal displays of large liquid-crystal display devices; light source lighting fixtures of backlights for liquid-crystal displays of small electronic devices such as mobile telephones, smartphones, and tablets; reflectors of LEDs used as light sources of electric display boards such as road traffic display boards; optical lens barrels; release films for printed wiring board stacking; substrates for solar cells; films for wrapping and packing; LED mold materials; housing components such as pump casings, impellers, piping joints, bathtubs, septic tanks, bathroom panels, exterior panels, window sash rails, window insulting materials, and washbasins; and industrial members such as liquid transport vessels, chemical tanks, chemical piping, gas piping, containers, pallets, and rack pillars.

### EXAMPLES

The following provides a more specific description of the present disclosure based on examples. However, the present disclosure is not limited to the following examples.

In the examples and comparative example, the following methods were used to measure and evaluate the glass-transition temperature and melting point of a polymer, the molecular weight and molecular weight distribution of a polymer, the percentage hydrogenation in hydrogenation of a polymer, the proportion of racemo diads in a polymer, the average dispersion diameter of an organophosphinate flame retardant in a shaping material, the metal corrosion during high-temperature shaping of a shaping material, and the flame retardancy and folding endurance of a shaped product.

### <Glass-transition temperature and melting point>

The glass-transition temperature and melting point of a polymer were measured in accordance with JIS K 7121 by differential scanning calorimetry with a heating rate of 10°C/min using a differential scanning calorimeter.

### <Molecular weight and molecular weight distribution>

Weight-average molecular weight (Mw) and number-average molecular weight (Mn) were determined as polystyrene-equivalent values by gel permeation chromatography (GPC) at 40°C with tetrahydrofuran as solvent, and the molecular weight distribution (Mw/Mn) was calculated. The following measurement apparatus and column were used.
Measurement apparatus: Gel permeation chromatography (GPC) system "HLC-8220" (produced by Tosoh Corporation)
Column: H-Type Column (produced by Tosoh Corporation)

### <Percentage hydrogenation>

The percentage hydrogenation of unsaturated bonds in a polymer was determined based on ¹H-NMR measurement.

### <Proportion of racemo diads>

The proportion of racemo diads (meso/racemo ratio) in a polymer (hydrogenated cycloolefin ring-opened polymer) was determined through ¹³C-NMR measurement by inverse-gated decoupling at 200°C with ortho-dichlorobenzene-d4/1,2,4-trichlorobenzene (TCB)-d3 (mixing ratio (by mass): 1/2) as a solvent. Specifically, the proportion of racemo diads was determined based on an intensity ratio of a signal at 43.35 ppm attributed to meso diads and a signal at 43.43 ppm attributed to racemo diads, and with a peak at 127.5 ppm for ortho-dichlorobenzene-d4 as a standard shift.

### <Average dispersion diameter of organophosphinate flame retardant>

The surface of a shaping material in the form of pellets that was obtained in each example or comparative example was observed using a digital microscope (produced by Keyence Corporation; product name: VHX-1000) in order to measure the diameter of organophosphinate flame retardant (primary particle or secondary particle (aggregate)) that was independently present surrounded by resin (hydrogenated cycloolefin ring-opened polymer). This operation was repeated and the arithmetic mean of 20 diameter values obtained in this manner was taken to be the average dispersion diameter.

### <Metal corrosion>

A shaping material in the form of pellets obtained in each example or comparative example was used to perform film formation continuously for 120 hours under conditions of a film formation temperature of 320°C and a shaped product thickness after film formation of 40 µm using a film extruder (produced by GSI Creos Corporation; coat-hanger type T-die film melt-extrusion molding machine including screw having a screw diameter of 20 mm, a compression ratio of 3.1, and L/D of 30). After this continuous operation, the occurrence of metal corrosion of a die of the film extruder was visually checked.

### <Flame retardancy>

### <<Flame retardancy test (UL-94V standard)>>

A shaped product A of 1.5 mm in thickness obtained in each example or comparative example was cut out as a belt shape of 13 mm in width and 125 mm in length by a hot cutter to obtain a test specimen. The test specimen was fixed vertically using a clamp, and cotton was arranged below the test specimen. The flame of a burner was brought into contact with the bottom edge of the test specimen for 10 seconds, was then removed, and the time taken for a flame that had been lit on the test specimen to extinguish was measured. Upon the flame of the test specimen extinguishing, the flame of the burner was brought back into contact for 10 seconds for a second time, and the time taken for the flame that had been lit on the test specimen to extinguish was measured in the same way as for the first time. In addition, it was evaluated whether the cotton arranged below the test specimen ignited due to live drippings during burning.

This evaluation was performed for 5 samples and then a burning rating was given in accordance with the UL-94V standard from the first and second burning times, ignition of the cotton, and so forth. The burning ratings are V-0, V-1, V-2, and sub-standard in order of highest flame retardancy (V-0 is highest and sub-standard is lowest).

### <<Flame retardancy test (UL-94VTM standard)>>

A shaped product B of 40 µm in thickness obtained in each example or comparative example was cut out as a belt shape of 50 mm in width and 200 mm in length by a cutter and was wound in a circular tube shape to obtain a test specimen. The test specimen was fixed vertically using a clamp, and cotton was arranged below the test specimen. The flame of a burner was brought into contact with the bottom edge of the test specimen for 3 seconds, was then removed, and the time taken for a flame that had been lit on the test specimen to extinguish was measured. Upon the flame of the test specimen extinguishing, the flame of the burner was brought back into contact for 3 seconds for a second time, and the time taken for the flame that had been lit on the test specimen to extinguish was measured in the same way as for the first time. In addition, it was evaluated whether the cotton arranged below the test specimen ignited due to live drippings during burning.

This evaluation was performed for 5 samples and then a burning rating was given in accordance with the UL-94VTM standard from the first and second burning times, the total burning time for the 5 test specimens, ignition of the cotton, and so forth. The burning ratings are VTM-0, VTM-1, VTM-2, and sub-standard in order of highest flame retardancy (VTM-0 is highest and sub-standard is lowest).

### <Folding endurance>

A shaped product B of 40 µm in thickness obtained in each example or comparative example was cut out as a belt shape of 150 mm in length and 15 mm in width by a cutter to obtain a test specimen. The test specimen was subjected to a folding endurance test in accordance with JIS P 8115 using an MIT tester (Model DA produced by Toyo Seiki Seisaku-Sho, Ltd.). The test load was 9.8 N, the folding angle was 135°, R of the folding surface was 0.38 mm, the folding rate was 175 times per minute, and the number of folds was 1,000. The sample was visually inspected after the test and an evaluation of "A" was given in a case in which cracks and fractures were not observed, whereas an evaluation of "B" was given in a case in which they were observed.

### <Flame retardants>

The following flame retardants were prepared for use in production of shaping materials.

### <<Organophosphinate flame retardants>>

### [Organophosphinate flame retardant (1)]

Compound indicated by following formula (V) (aluminum tris(diethylphosphinate); product name: Exolit® OP935 (Exolit is a registered trademark in Japan, other countries, or both); melting point: > 300°C)

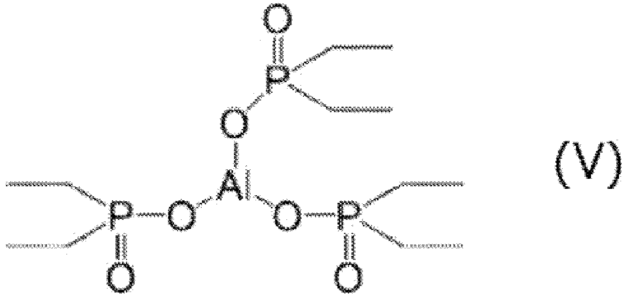

### [Organophosphinate flame retardant (2)]

Compound indicated by preceding formula (V) (aluminum tris(diethylphosphinate); product name: Exolit® OP945; melting point: > 300°C; product having smaller primary particle diameter than organophosphinate flame retardant (1))

### <<Condensed phosphate ester flame retardant (1)>>

Compound indicated by following formula (VI) (produced by Adeka Corporation; product name: FP-800; melting point: 65°C to 85°C; n in formula (VI) is an integer of not less than 2 and not more than 30)

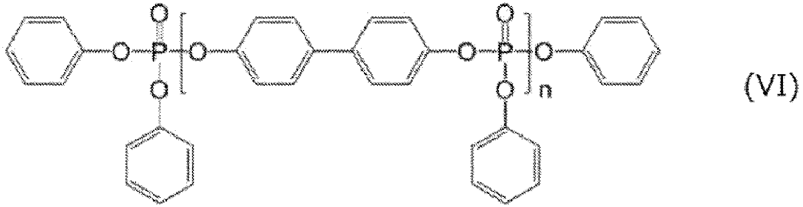

### <Hydrogenated cycloolefin ring-opened polymers>

Hydrogenated cycloolefin ring-opened polymers were produced by the following procedures for use in production of shaping materials.

### <<Production Example 1 (amorphous hydrogenated cycloolefin ring-opened polymer)>>

A reactor equipped with a stirrer was dried and then internally purged with nitrogen, was subsequently charged with 300 parts by mass of cyclohexane, 0.5 parts by mass of 1-hexene, 0.15 parts by mass of dibutyl ether, and 1.5 parts by mass of a 10 mass% cyclohexane solution of triisobutylaluminum at room temperature, and then the contents thereof were heated to 40°C. Next, the contents of the reactor were held at 40°C under stirring while a mixture of 70 parts by mass of tetracyclododecene and 30 parts by mass of dicyclopentadiene, and 11 parts by mass of a 0.6 mass% cyclohexane solution of tungsten hexachloride were, concurrently to one another, added continuously into the reactor to carry out a polymerization reaction. Next, 0.5 parts by mass of butyl glycidyl ether and 0.2 parts by mass of isopropyl alcohol were added into the reactor and the polymerization reaction was stopped. Upon measuring the molecular weight of a cycloolefin ring-opened polymer using a portion of the resultant polymerization reaction liquid, the weight-average molecular weight (Mw) was 42,000 and the molecular weight distribution (Mw/Mn) was 2.30.

Next, 400 parts by mass of the resultant polymerization reaction liquid was transferred to a pressure-resistant reactor including a stirring device, 4 parts by mass of diatomaceous earth-supported nickel catalyst (T8400RL; supported nickel ratio: 57%; produced by Sud-Chemie Catalysts Japan Inc.) was added thereto, and a hydrogenation reaction was carried out at 170°C and a hydrogen pressure of 4.5 MPa for 5 hours. The reaction solution was subsequently filtered to remove the hydrogenation catalyst, and then 0.1 parts by mass of pentaerythritol tetrakis[3-(3,5-di-t-butyl-4-hydroxyphenyl)propionate] was added to the filtrate. Volatile content was evaporated from the solution under conditions of a temperature of 260°C (533K), a pressure of 1 kPa or less, and a residence time of 1.2 hours using a thin film evaporator (product name: Filmtruder; produced by Buss) to obtain a hydrogenated tetracyclododecene-dicyclopentadiene cycloolefin ring-opened polymer.

The percentage hydrogenation in the hydrogenation reaction was 99% or more. Moreover, the glass-transition temperature of the obtained hydrogenated cycloolefin ring-opened polymer was 142°C. Note that a melting point was not observed.

### <<Production Example 2 (crystalline hydrogenated cycloolefin ring-opened polymer)>>

A metal pressure-resistant reactor that had been internally purged with nitrogen was charged with 154.5 parts by mass of cyclohexane, 42.8 parts by mass (30 parts by mass in terms of dicyclopentadiene) of a cyclohexane solution (concentration: 70 mass%) of dicyclopentadiene (endo isomer content: 99 mass% or more), and 1.9 parts by mass of 1-hexene, and the contents thereof were heated to 53°C. Meanwhile, 0.014 parts by mass of tetrachlorotungsten phenylimide (tetrahydrofuran) complex was dissolved in 0.70 parts by mass of toluene, and then 0.061 parts by mass of an n-hexane solution (concentration: 19 mass%) of diethylaluminum ethoxide was added to the resultant solution and was stirred therewith for 10 minutes to produce a catalyst solution. The catalyst solution was added into the aforementioned reactor, and a ring-opening polymerization reaction was carried out at 53°C for 4 hours to obtain a solution containing a dicyclopentadiene ring-opened polymer.

The polymerization reaction was stopped by adding 0.037 parts by mass of 1,2-ethanediol as an inhibitor to 200 parts by mass of the obtained solution of the dicyclopentadiene ring-opened polymer and performing stirring thereof at 60°C for 1 hour. Thereafter, 1 part by mass of a hydrotalcite-like compound (produced by Kyowa Chemical Industry Co., Ltd.; product name: KYOWAAD® 2000 (KYOWAAD is a registered trademark in Japan, other countries, or both)) was added as an adsorbent, heating was performed to 60°C, and stirring was performed for 1 hour. Next, 0.4 parts by mass of a filter aid (produced by Showa Chemical Industry Co., Ltd.; product name: Radiolite® #1500 (Radiolite is a registered trademark in Japan, other countries, or both)) was added and the adsorbent was filtered off using a PP pleated cartridge filter (produced by Advantec Toyo Kaisha, Ltd.; product name: TCP-HX) to obtain a solution containing the dicyclopentadiene ring-opened polymer. Upon measuring the molecular weight of the dicyclopentadiene ring-opened polymer using a portion of this solution, the weight-average molecular weight (Mw) was 28,100, the number-average molecular weight (Mn) was 8,750, and the molecular weight distribution (Mw/Mn) was 3.21.

Next, 100 parts by mass of cyclohexane and 0.0043 parts by mass of chlorohydridocarbonyltris(triphenylphosphine)ruthenium as a hydrogenation catalyst were added to 200 parts by mass of the solution containing the dicyclopentadiene ring-opened polymer (polymer content: 30 parts by mass) after the purification treatment described above, and a hydrogenation reaction was carried out at 180°C and a hydrogen pressure of 6 MPa for 4 hours. The reaction liquid was a slurry in which solid content had precipitated. Solid content and solution were separated through centrifugal separation of the reaction liquid, and then the solid content was dried under reduced pressure at 60°C for 24 hours to obtain 28.5 parts by mass of a hydrogenated cycloolefin (dicyclopentadiene) ring-opened polymer. The percentage hydrogenation in the hydrogenation reaction was 99% or more. Moreover, the obtained hydrogenated cycloolefin ring-opened polymer had a glass-transition temperature of 98°C, a melting point of 262°C, and a proportion of racemo diads (i.e., syndiotacticity) of 90%.

### (Example 1)

### <Production of shaping material>

A twin screw kneading extruder (produced by Toshiba Machine Co., Ltd.; product name: TEM-37BS) was used to knead 100 parts by mass of the crystalline hydrogenated cycloolefin ring-opened polymer obtained in Production Example 2 and 30 parts by mass of the organophosphinate flame retardant (1) and to obtain strands (molten resin in the form of rods). The obtained strands were cut by a strand cutter to obtain a shaping material in the form of pellets. The operating conditions of the twin screw kneading extruder were as follows.
- Barrel temperature setting: 270°C to 290°C
- Screw speed: 200 rpm
- Screw diameter: 37 mm
- L/D: 50

Note that the organophosphinate flame retardant (1) was added (side fed) to the hydrogenated cycloolefin ring-opened polymer during kneading thereof using a side feeder of the twin screw kneading extruder (i.e., the hydrogenated cycloolefin ring-opened polymer was premixed, and the organophosphinate flame retardant (1) was added to the hydrogenated cycloolefin ring-opened polymer being premixed).

The shaping material obtained in the form of pellets was used to evaluate the average dispersion diameter of the organophosphinate flame retardant and metal corrosion during high-temperature shaping. The results are shown in Table 1.

### <Production of shaped product A>

The shaping material obtained in the form of pellets as described above was loaded into a mold that had undergone release treatment and was subsequently hot pressed at a temperature of 280°C and a pressure of 3 MPa to obtain a shaped product A having a thickness of 1.5 mm. The flame retardancy of this shaped product A was evaluated by a flame retardancy test (UL-94V standard). The result is shown in Table 1.

### <Production of shaped product B>

The shaping material obtained in the form of pellets as described above was used in film formation by a film extruder (produced by GSI Creos Corporation; coat-hanger type T-die film melt-extrusion molding machine including screw having a screw diameter of 20 mm, a compression ratio of 3.1, and L/D of 30) to obtain a shaped product B having a thickness of 40 µm . The flame retardancy of this shaped product B was evaluated by a flame retardancy test (UL-94VTM standard). In addition, folding endurance of the shaped product B was evaluated. The results are shown in Table 1.

### (Example 2)

A shaping material, a shaped product A, and a shaped product B were produced and various evaluations were performed in the same way as in Example 1 with the exception that the amorphous hydrogenated cycloolefin ring-opened polymer obtained in Production Example 1 was used instead of the crystalline hydrogenated cycloolefin ring-opened polymer obtained in Production Example 2, and the amount of the organophosphinate flame retardant (1) was changed from 30 parts by mass to 20 parts by mass. The results are shown in Table 1.

### (Example 3)

A shaping material, a shaped product A, and a shaped product B were produced and various evaluations were performed in the same way as in Example 1 with the exception that 70 parts by mass of the organophosphinate flame retardant (2) was used instead of 30 parts by mass of the organophosphinate flame retardant (1). The results are shown in Table 1.

### (Example 4)

A shaping material, a shaped product A, and a shaped product B were produced and various evaluations were performed in the same way as in Example 2 with the exception that the amount of the organophosphinate flame retardant (1) was changed to 30 parts by mass, and 10 parts by mass of the condensed phosphate ester flame retardant (1) was added to the hydrogenated cycloolefin ring-opened polymer being kneaded in the same manner as the organophosphinate flame retardant (1). The results are shown in Table 1.

### (Comparative Example 1)

A shaping material, a shaped product A, and a shaped product B were produced and various evaluations were performed in the same way as in Example 1 with the exception that the organophosphinate flame retardant (1) was loaded (top fed) into the twin screw kneading extruder at the same time as the hydrogenated cycloolefin ring-opened polymer. The results are shown in Table 1.

**Table 1**

| | | Example 1 | Example 2 | Example 3 | Example 4 | Comparative Example 1 |
|---|---|---|---|---|---|---|
| Amorphous hydrogenated cycloolefin ring-opened polymer [parts by mass] | | - | 100 | - | 100 | - |
| Crystalline hydrogenated cycloolefin ring-opened polymer [parts by mass] | | 100 | - | 100 | - | 100 |
| Flame retardant [parts by mass] | Organophosphinate flame retardant (1) | 30 | 20 | - | 30 | 30 |
| | Organophosphinate flame retardant (2) | - | - | 70 | - | - |
| | Condensed phosphate ester flame retardant (1) | - | - | - | 10 | - |
| Loading method of flame retardant | | Side feeding | Side feeding | Side feeding | Side feeding | Top feeding |
| Average dispersion diameter of organophosphinate flame retardant [µm] | | 8 | 2 | 3 | 7 | 12 |
| Flame retardancy | Flame retardancy test (UL-94VTM standard) | VTM-2 | VTM-2 | VTM-2 | VTM-2 | Sub- standard |
| | Flame retardancy test (UL-94V standard) | V-2 | V-2 | V-2 | V-2 | V-2 |
| Metal corrosion | | No | No | No | Yes | No |
| Folding endurance | | A | A | A | A | B |

It can be seen from Table 1 that it is possible to form a shaped product having excellent flame retardancy by using a shaping material that contains a hydrogenated cycloolefin ring-opened polymer and a specific organophosphinate flame retardant, and in which the average dispersion diameter of the specific organophosphinate flame retardant is 10 µm or less. It can also be seen that a shaped product having excellent folding endurance is obtained by using this shaping material.

It can also be seen from Table 1 that metal corrosion (die corrosion) during high-temperature shaping of a shaping material could be inhibited in Examples 1 to 3 in which only an organophosphinate flame retardant was used without using a condensed phosphate ester flame retardant.

### INDUSTRIAL APPLICABILITY

According to the present disclosure, it is possible to provide a shaping material with which a shaped product having excellent flame retardancy can be formed and a shaped product that has excellent flame retardancy.

## Claims

1. A shaping material comprising a hydrogenated cycloolefin ring-opened polymer and an organophosphinate flame retardant, wherein
the organophosphinate flame retardant is either or both of:
a compound indicated by formula (I), shown below, 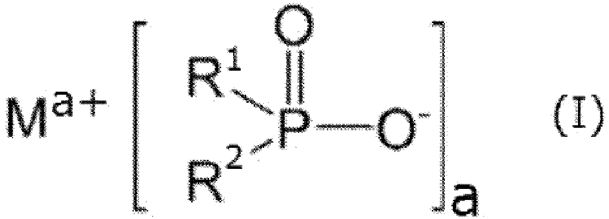 where, in formula (I),
R¹ and R² each represent, independently of one another, an optionally substituted alkyl group or an optionally substituted aryl group,
M^{a+} represents a metal ion having a valence of a, and
a represents an integer of not less than 1 and not more than 3; and
a compound indicated by formula (II), shown below, 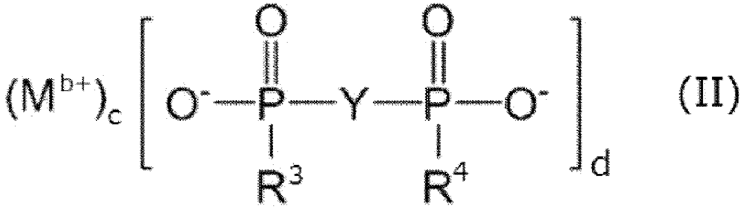 where, in formula (II),
R³ and R⁴ each represent, independently of one another, an optionally substituted alkyl group or an optionally substituted aryl group,
Y represents a divalent group,
M^{b+} represents a metal ion having a valence of b, and
b, c, and d each represent an integer of not less than 1 and not more than 3 and satisfy b × c = 2 × d, and
the organophosphinate flame retardant has an average dispersion diameter of 10 µm or less.

2. The shaping material according to claim 1, wherein content of the organophosphinate flame retardant is not less than 10 parts by mass and not more than 80 parts by mass per 100 parts by mass of the hydrogenated cycloolefin ring-opened polymer.

3. The shaping material according to claim 1 or 2, wherein content of the organophosphinate flame retardant constitutes not less than 70 mass% and not more than 100 mass% among total content of the organophosphinate flame retardant and a condensed phosphate ester flame retardant indicated by formula (III), shown below, 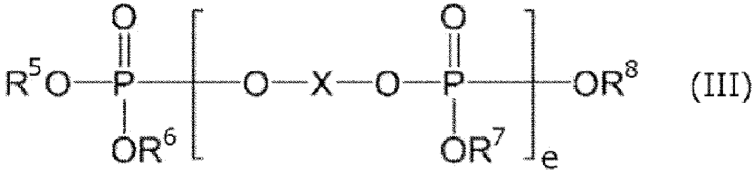 where, in formula (III),
R⁵, R⁶, R⁷, and R⁸ each represent, independently of one another, an optionally substituted aryl group,
X represents a divalent group having an arylene structure, and
e represents an integer of 2 or more.

4. A shaped product obtained through shaping of the shaping material according to any one of claims 1 to 3.
